# EUROPEAN PATENT SPECIFICATION

(11) **EP 1 290 540 B1**
(45) Date of publication and mention of the grant of the patent: **12.05.2004**
(21) Application number: 01947358.6
(22) Date of filing: 11.06.2001
(51) Int. Cl.: G06F 3/05

(54) **ANALOGUE TO DIGITAL SIGNAL CONVERSION**
ANALOG-DIGITAL SIGNALUMWANDLUNG
CONVERSION DE SIGNAUX ANALOGIQUES EN NUMERIQUES

(30) Priority: 16.06.2000 GB 0014840
(43) Date of publication of application: 12.03.2003
(73) Proprietor: Telefonaktiebolaget LM Ericsson (publ), 16483 Stockholm (SE)
(72) Inventor: HEYL, Christian, S-247 32 Södra Sandby (SE); SJÖLANDER, Joachim, S-211 50 Malmö (SE)
(74) Representative: Clarke, Alison Clare
(86) International application number: PCT/EP2001/006592
(87) International publication number: WO 2001/097000

(56) References cited:
- US-A- 4 924 399
- US-A- 5 926 124
- PATENT ABSTRACTS OF JAPAN vol. 007, no. 253 (P-235), 10 November 1983 (1983-11-10) & JP 58 137042 A (TOKYO SHIBAURA DENKI KK), 15 August 1983 (1983-08-15)
- DATABASE WPI Section EI, Week 199925 Derwent Publications Ltd., London, GB; Class W02, AN 1999-299520 XP002204976 CHOE YOUNG-SOON: "RADIO PAGING DEVICE" & KR 9 611 823 B (RF TECH CO LTD), 30 August 1996 (1996-08-30)

## Description

### Field of the Invention

The present invention relates to analogue to digital signal conversion, and in particular to A to D converters for use in portable electronic devices.

### Background of the Invention

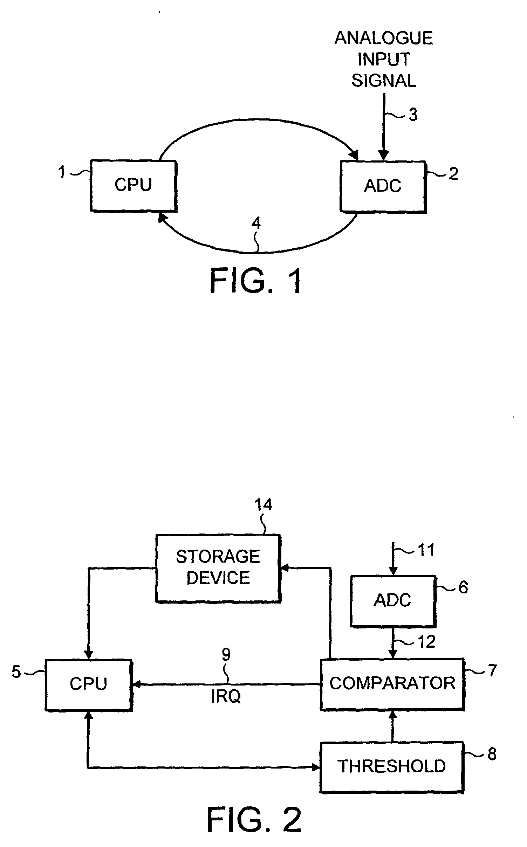

Many portable electronic devices require monitoring of analogue signals by the central processing unit (CPU) of the device, for example to detect predetermined changes in those signals to trigger actions or to control characteristics of the device. Accordingly, as is well known, it is necessary to convert the analogue signal to a digital signal for use by the CPU. Figure 1 shows schematically a device including a CPU 1 and an analogue to digital converter ADC 2. In previously considered solutions, the A to D converter 2 is provided by an analogue ASIC (application specific integrated circuit) which is controlled by the CPU 1. When the CPU 1 requires determination of the level of an analogue signal, then the CPU controls the ADC 2 so that an analogue input signal 3 is converted to a digital output signal 4. This requires CPU activity, and can therefore increase the power consumed by the CPU. Such a solution also has an impact on time critical processes since the CPU is required to await the output from the ADC 2 before continuing.

In complex systems there are many signals to monitor, some of them change quickly and others slowly. In slowly-changing and steady state signals, there will be many unnecessary A to D conversions, and hence unnecessary increased CPU activity, since for a quick CPU reaction time the frequency of sampling the signal must be increased. In addition, when a signal passes a threshold level there is time lost between the passing of the threshold level and the activation of the ADC by the CPU. This reaction time is naturally dependent upon the sampling frequency of the CPU software.

US Patent 5,731,806 describes an analogue to digital converter for use with a joystick for a computer or computer games system. In such a system, the previous joystick position is compared with the current joystick position. The position of the joystick is indicated by analogue signals converted to respective digital signals, and when the difference between the two positions exceeds a predetermined value, the joystick logic outputs an interrupt to the CPU. The comparison is performed each time the CPU issues a signal requiring an indication from the joystick of movement of that joystick. Accordingly, such a system does not overcome the problem associated with portable electronic devices, namely the increased power consumption of increasing CPU usage, since CPU usage is not reduced to an absolute minimum. In addition, such a device does not measure absolute values, but rather merely measures differences between signals for comparison with a threshold value. Furthermore, there is no provision for triggering on positive or negative edges, since only signal magnitude is considered.

US 5926124 discloses a signal processor of measurement apparatus including a comparator which compares a digital value with a threshold value, the threshold value being selected between two preset values. The output signal is stored for transfer to a control unit.

### Summary of the Present Invention

It is emphasised that the use of the term "comprises" or "comprising" in this specification is taken to specify the presence of stated features, integers, steps or components, but does not preclude the inclusion of one or more additional features, integers, steps or components, or groups thereof.

According to one aspect of the present invention, there is provided a portable electronic device comprising a control unit and an analogue to digital conversion apparatus, wherein the conversion apparatus comprises:
an A to D converter device operable to convert an analogue input signal to a digital output signal;
a comparator device operable to compare the value of the digital output signal with a digital threshold value to produce a comparison signal, and operable to produce an interrupt signal for transfer to the control unit in dependence upon the comparison signal, wherein the apparatus further comprises
a threshold register operable to store the digital threshold value, and
a storage device operable to store the digital output signal.

According to another aspect of the present invention, there is provided a method of monitoring an analogue signal in a portable electronic device comprising a control unit and an analogue to digital converter unit, the method comprising:
using the analogue to digital converter;
receiving an input analogue signal;
converting the input analogue signal to an output digital signal;
comparing the value of the signal output digital signal with a threshold value; and
sending an interrupt signal to the control unit in dependence upon the result of the comparison, wherein the value of the digital output signal is stored for retrieval.

### Brief Description of the Drawings

Figure 1 is a schematic diagram showing the prior art A to D converter apparatus; and
Figure 2 is a schematic diagram of an embodiment of the present invention.

### Detailed Description of the Preferred Embodiment

Figure 2 illustrates an analogue to digital converter apparatus embodying the present invention and comprising a CPU 5, an A to D converter ADC 6, a comparator 7 and a threshold storage device 8. The apparatus shown in Figure 2 is suitable for monitoring an analogue input signal 11. The analogue input signal 11 is supplied to the ADC 6 which operates continuously to convert the analogue signal to a digital signal 12. The digital signal 12 is compared by the comparator 7 with a threshold value stored in the threshold storage device 8. The comparator operates to produce an interrupt request IRQ 9 for supply to the CPU 5 when the digital value 12 meets the threshold criterion determined by the threshold value 8. The threshold value 8 can be programmed by the CPU 5.

Such an apparatus can reduce the amount of CPU activity to monitor an analogue signal, since the CPU is only used when the analogue signal meets the threshold criterion. This can also promote faster reaction time, since the IRQ 9 is produced as soon as threshold criterion is fulfilled. The handling of the IRQ can be determined by software controlling the CPU, and so the device in which the system is installed can react appropriately. Lower CPU activity leads to lower power consumption, and lower unnecessary CPU activity means that a higher proportion of the CPU's time can be spent on time critical applications.

The criterion for determining production of the IRQ 9 can simply be that the digital signal 12 exceeds the threshold value. Alternatively, the threshold value could be a lower value that triggers an IRQ 9 when the digital signal drops below the value. Instead of simply setting a threshold value for comparison with the digital signal 12, it is possible to determine the slope of the digital signal 12 (and the analogue signal 11) whilst passing a threshold value so that it may be determined whether the analogue signal is rising or falling.

Also illustrated in Figure 2 is a storage device 14. This is provided for storing the value of the digital output signal 12 which is compared with the threshold value. The actual digital value that causes an interrupt to be produced is stored in the storage device 14. The value that is stored in the device 14 is accessible by the control unit. The storing of the value that causes the interrupt enables the CPU to analyse the cause of the interrupt. For example it is possible that a momentary change in value (or "glitch") may occur that causes an interrupt to be produced, but does not in fact indicate the occurrence of a genuine interrupt condition.

A converter embodying the present invention can have several uses in a portable device. For example, when charging the battery of the device, it is possible to interrupt the CPU only when the required voltage or current value is reached. Monitoring of the battery presence and/or level can be achieved; the converter can keep track of different battery levels to manage battery consumption or measure remaining capacity of the battery. He threshold value could then indicate a battery threshold value such as state of charge that causes an interrupt condition to be caused. For example, the threshold value may indicate when the battery is at full charge, or when the battery is at an undesirably low charge.

Temperature monitoring, and in particular alarm condition monitoring, can be easily achieved with low CPU intervention. In the case of temperature monitoring, a threshold temperature value, for example indicating a high operating temperature, can be used as the basis of the comparison with the input temperature value.

In addition, such a converter can be used to detect connection of accessories to the device, simply by monitoring connection line levels and comparing these to threshold levels. It is desirable that different accessories have different line levels associated with them. In this way it is possible to determine the identity of the accessory that is connected to the device. Furthermore, and particularly when more than one accessory is connected, it is possible to differentiate between different types of control signals depending upon the level of the signals. Ths then allows the provision of analogue and control signals on a single line.

It will be appreciated that any portable electronic device could make use of a converter embodying the present invention. For example, mobile telephones and personal digital assistants (PDAs) could make use of the present invention.

## Claims

1. A portable electronic device comprising a control unit (5) and an analogue to digital conversion apparatus, wherein the conversion apparatus comprises:
an A to D converter device (6) operable to convert an analogue input signal (11) to a digital output signal (12); and
a comparator device (7) operable to compare the value of the digital output signal (12) with a digital threshold value to produce a comparison signal, and operable to produce an interrupt signal (9) for transfer to the control unit in dependence upon the comparison signal; **characterised in that** the apparatus further comprises,
a threshold register (8) operable to store the digital threshold value; and
a storage device (14) operable to store the digital output signal (12).

2. A device as claimed in claim 1, wherein the comparator device (7) includes means for determining the slope of the analogue input signal (11), such that the comparison signal is indicative of this slope.

3. A device as claimed in claim 1 or 2, wherein the threshold value is programmable by the control unit (5).

4. A device as claimed in claim 1, 2 or 3, wherein the threshold register (8) is accessible by the control unit (5), and wherein the control unit (5) is operable to store a required threshold value in the threshold register (8).

5. A device as claimed in claim 1, wherein the storage device (14) is operable to store the digital output signal (12) that results in an interrupt signal (9).

6. A device as claimed in claim 1, wherein the storage device (14) is accessible by the control unit (5), and the control unit (5) is operable to retrieve the digital output signal (12) from the storage device (14).

7. A device as claimed in any one of the preceding claims, wherein the analogue input signal (11) is indicative of a temperature, and the threshold value is indicative of a threshold temperature.

8. A device as claimed in any one of claims 1 to 6, wherein the analogue input signal (11) is indicative of a state of charge of a battery of the device, and the threshold value is indicative of a threshold battery charge level.

9. A device as claimed in any one of the preceding claims, wherein the control unit (5) is operable, upon receipt of the interrupt signal (9) from the comparator device (7), to perform at least one predetermined instruction.

10. A device as claimed in any one of the preceding claims, including an accessory device, and wherein the analogue input signal (11) is indicative of the identity of the accessory device.

11. A device as claimed in any one of claims 1 to 10, including an accessory device, and wherein the analogue input signal (11) is indicative of the status of the accessory device.

12. A device as claimed in any one of the preceding claims, wherein the interrupt signal (11) is produced when the comparison signal indicates that the value of the digital output signal (12) exceeds the threshold value.

13. A device as claimed in any one of claims 1 to 12, wherein the interrupt signal (9) is produced when the comparison signal indicates that the value of the digital output signal (12) is less than the threshold value.

14. A device as claimed in any one of claims 1 to 12, wherein the interrupt signal (9) is produced when the comparison signal indicates that the value of the digital output signal (12) is rising with respect to the threshold value.

15. A device as claimed in any one of claims 1 to 12, wherein the interrupt signal (9) is produced when the comparison signal indicates that the value of the digital output signal (12) is falling with respect to the threshold value.

16. A device as claimed in any one of the preceding claims, wherein the device is a mobile telephone.

17. A device as claimed in any one of claims 1 to 16, wherein the device is a portable digital assistant (PDA).

18. A method of monitoring an analogue signal (11) in a portable electronic device comprising a control unit (5) and an analogue to digital converter unit (6), the method comprising:
using the analogue to digital converter (6);
receiving an input analogue signal (11);
converting the input analogue signal (11) to an output digital signal (12);
comparing the value of the output digital signal (12) with a threshold value; and
sending an interrupt signal (9) to the control unit (5) in dependence upon the result of the comparison, **characterised in that** the value of the digital output signal (12) is stored for retrieval.

19. A method as claimed in claim 18, wherein the value of the digital output signal (12) which causes an interrupt signal (9) is stored.

20. A method as claimed in claim 18 or 19, wherein the stored value is accessible by the control unit (5).

21. A method as claimed in any one of claims 18 to 20, wherein the interrupt signal (9) is sent to the control unit (5) if the value of the digital output signal (12) exceeds the threshold value.

22. A method as claimed in any one of claims 18 to 20, wherein the interrupt signal (9) is sent to the control unit (5) if the value of the digital output signal (12) is less than the threshold value.

23. A method as claimed in any one of claims 18 to 20, wherein the interrupt signal (9) is sent to the control unit (5) if the digital output signal (12) is falling with respect to the threshold value.

24. A method as claimed in any one of claims 18 to 20, wherein the interrupt signal (9) is sent to the control unit (5) if the value of the digital output signal (12) is rising with respect to the threshold value.

25. A method as claimed in any one of claims 18 to 24, wherein the threshold value is set by the control unit (5).

26. A method as claimed in any one of claims 18 to 25, wherein the device is a mobile telephone.

27. A method as claimed in any one of claims 18 to 25, wherein the device is a portable digital assistant (PDA).

## Patentansprüche

1. Tragbare elektronische Einrichtung, umfassend eine Steuereinheit (5) und eine Analog-Digital-Konvertierungsvorrichtung, wobei die Konvertierungsvorrichtung umfasst:
eine A/D-Konvertereinrichtung (6), die betriebsfähig ist, ein analoges Eingangssignal (11) zu einem digitalen Ausgangssignal (12) zu konvertieren; und
eine Komparatoreinrichtung (7), die betriebsfähig ist, den Wert des digitalen Ausgangssignals (12) mit einem digitalen Schwellwert zu vergleichen, um ein Vergleichssignal zu erzeugen, und die betriebsfähig ist, ein Interruptsignal (9) für eine Übertragung zu der Steuereinheit in Abhängigkeit von dem Vergleichssignal zu erzeugen; **gekennzeichnet dadurch, dass** die Vorrichtung ferner umfasst,
ein Schwellenregister (8), das betriebsfähig ist, den digitalen Schwellwert zu speichern; und
eine Speichereinrichtung (14), die betriebsfähig ist, das digitale Ausgangssignal (12) zu speichern.

2. Einrichtung, wie in Anspruch 1 beansprucht, wobei die Komparatoreinrichtung (7) ein Mittel zum Bestimmen der Steigung des analogen Eingangssignals (11) derart umfasst, dass das Vergleichssignal diese Steigung anzeigt.

3. Einrichtung, wie in Anspruch 1 oder 2 beansprucht, wobei der Schwellwert durch die Steuereinheit (5) programmierbar ist.

4. Einrichtung, wie in Anspruch 1, 2 oder 3 beansprucht, wobei auf das Schwellenregister (8) durch die Steuereinheit (5) zugegriffen werden kann, und wobei die Steuereinheit (5) betriebsfähig ist, einen erforderlichen Schwellwert in dem Schwellenregister (8) zu speichern.

5. Einrichtung, wie in Anspruch 1 beansprucht, wobei die Speichereinrichtung (14) betriebsfähig ist, das digitale Ausgangssignal (12) zu speichern, das zu einem Interruptsignal (9) führt.

6. Einrichtung, wie in Anspruch 1 beansprucht, wobei auf die Speichereinrichtung (14) durch die Steuereinheit (15) zugegriffen werden kann, und die Steuereinheit (5) betriebsfähig ist, das digitale Ausgangssignal (12) von der Speichereinrichtung (14) abzufragen.

7. Einrichtung, wie in einem beliebigen der vorangehenden Ansprüche beansprucht, wobei das analoge Eingangssignal (11) eine Temperatur anzeigt, und der Schwellwert eine Schwellentemperatur anzeigt.

8. Einrichtung, wie in einem beliebigen von Ansprüchen 1 bis 6 beansprucht, wobei das analoge Eingangssignal (11) einen Ladezustand einer Batterie der Einrichtung anzeigt, und der Schwellwert einen Schwellenbatterieladepegel anzeigt.

9. Einrichtung, wie in einem beliebigen der vorangehenden Ansprüche beansprucht, wobei die Steuereinheit (5) betriebsfähig ist, bei Empfang des Interruptsignals (9) von der Komparatoreinrichtung (7) mindestens eine vorbestimmte Instruktion durchzuführen.

10. Einrichtung, wie in einem beliebigen der vorangehenden Ansprüche beansprucht, inkludierend eine Zubehöreinrichtung, und wobei das analoge Eingangssignal (11) die Identität der Zubehöreinrichtung anzeigt.

11. Einrichtung, wie in einem beliebigen von Ansprüchen 1 bis 10 beansprucht, inkludierend eine Zubehöreinrichtung, und wobei das analoge Eingangssignal (11) den Status der Zubehöreinrichtung anzeigt.

12. Einrichtung, wie in einem beliebigen der vorangehenden Ansprüche beansprucht, wobei das Interruptsignal (11) erzeugt wird, wenn das Vergleichssignal anzeigt, dass der Wert des digitalen Ausgangssignals (12) den Schwellwert überschreitet.

13. Einrichtung, wie in einem beliebigen von Ansprüchen 1 bis 12 beansprucht, wobei das Interruptsignal (9) erzeugt wird, wenn das Vergleichssignal anzeigt, dass der Wert des digitalen Ausgangssignals (12) kleiner als der Schwellwert ist.

14. Einrichtung, wie in einem beliebigen von Ansprüchen 1 bis 12 beansprucht, wobei das Interruptsignal (9) erzeugt wird, wenn das Vergleichssignal anzeigt, dass der Wert des digitalen Ausgangssignals (12) in Bezug auf den Schwellwert ansteigt.

15. Einrichtung, wie in einem beliebigen von Ansprüchen 1 bis 12 beansprucht, wobei das Interruptsignal (9) erzeugt wird, wenn das Vergleichssignal anzeigt, dass der Wert des digitalen Ausgangssignals (12) in Bezug auf den Schwellwert abfällt.

16. Einrichtung, wie in einem beliebigen der vorangehenden Ansprüche beansprucht, wobei die Einrichtung ein Mobiltelefon ist.

17. Einrichtung, wie in einem beliebigen von Ansprüchen 1 bis 16 beansprucht, wobei die Einrichtung ein tragbarer digitaler Assistent (PDA) ist:

18. Verfahren zum Überwachen eines analogen Signals (11) in einer tragbaren elektronischen Einrichtung, umfassend eine Steuereinheit (5) und eine Analog-Digital-Konvertereinheit (6), wobei das Verfahren umfasst:
Verwenden des Analog-Digital-Konverters (6);
Empfangen eines eingegebenen analogen Signals (11);
Konvertieren des eingegebenen analogen Signals (11) zu einem ausgegebenen digitalen Signal (12);
Vergleichen des Werts des ausgegebenen digitalen Signals (12) mit einem Schwellwert; und
Senden des Interruptsignals (9) zu der Steuereinheit (5) in Abhängigkeit von dem Ergebnis des Vergleichs, **gekennzeichnet dadurch, dass** der Wert des digitalen Ausgangssignals (12) für eine Abfrage gespeichert wird.

19. Verfahren, wie in Anspruch 18 beansprucht, wobei der Wert des digitalen Ausgangssignals (12), der ein Interruptsignal (9) veranlasst, gespeichert wird.

20. Verfahren, wie in Anspruch 18 oder 19 beansprucht, wobei auf den gespeicherten Wert durch die Steuereinheit (5) zugegriffen werden kann.

21. Verfahren, wie in einem beliebigen von Ansprüchen 18 bis 20 beansprucht, wobei das Interruptsignal (9) zu der Steuereinheit (5) gesendet wird, falls der Wert des digitalen Ausgangssignals (12) den Schwellwert überschreitet.

22. Verfahren, wie in einem beliebigen von Ansprüchen 18 bis 20 beansprucht, wobei das Interruptsignal (9) zu der Steuereinheit (5) gesendet wird, falls der Wert des digitalen Ausgangssignals (12) kleiner als der Schwellwert ist.

23. Verfahren, wie in einem beliebigen von Ansprüchen 18 bis 20 beansprucht, wobei das Interruptsignal (9) zu der Steuereinheit (5) gesendet wird, falls das digitale Ausgangssignal (12) in Bezug auf den Schwellwert abfällt.

24. Verfahren, wie in einem beliebigen von Ansprüchen 18 bis 20 beansprucht, wobei das Interruptsignal (9) zu der Steuereinheit (5) gesendet wird, falls der Wert des digitalen Ausgangssignals (12) in Bezug auf den Schwellwert ansteigt.

25. Verfahren, wie in einem beliebigen von Ansprüchen 18 bis 24 beansprucht, wobei der Schwellwert durch die Steuereinheit (5) eingestellt wird.

26. Verfahren, wie in einem beliebigen von Ansprüchen 18 bis 25 beansprucht, wobei die Einrichtung ein Mobiltelefon ist.

27. Verfahren, wie in einem beliebigen von Ansprüchen 18 bis 25 beansprucht, wobei die Einrichtung ein tragbarer digitaler Assistent (PDA) ist.

## Revendications

1. Dispositif électronique portable comportant une unité de commande (5) et un appareil de conversion analogique en numérique, dans lequel l'appareil de conversion comporte :
un dispositif (6) à convertisseur A à N pouvant fonctionner de façon à convertir un signal analogique d'entrée (11) en un signal numérique de sortie (12) ; et
un dispositif à comparateur (7) pouvant fonctionner de façon à comparer la valeur du signal numérique de sortie (12) à une valeur numérique de seuil pour produire un signal de comparaison, et pouvant fonctionner de façon à produire un signal d'interruption (9) pour un transfert à l'unité de commande en fonction du signal de comparaison ;
**caractérisé en ce que** l'appareil comporte en outre
un registre à seuil (8) pouvant fonctionner de façon à stocker la valeur numérique de seuil ; et
un dispositif de stockage (14) pouvant fonctionner de façon à stocker le signal numérique de sortie (12).

2. Dispositif selon la revendication 1, dans lequel le dispositif à comparateur (7) comprend un moyen destiné à déterminer la pente du signal analogique d'entrée (11), de façon que le signal de comparaison soit représentatif de cette pente.

3. Dispositif selon la revendication 1 ou 2, dans lequel la valeur de seuil peut être programmée par l'unité de commande (5).

4. Dispositif selon la revendication 1, 2 ou 3, dans lequel le registre de seuil (8) est accessible par l'unité de commande (5), et dans lequel l'unité de commande (5) peut fonctionner de façon à stocker une valeur de seuil nécessaire dans le registre de seuil (8).

5. Dispositif selon la revendication 1, dans lequel le dispositif de stockage (14) peut fonctionner de façon à stocker le signal numérique de sortie (12) qui aboutit à un signal d'interruption (9).

6. Dispositif selon la revendication 1, dans lequel le dispositif de stockage (14) est accessible par l'unité de commande (5), et l'unité de commande (5) peut fonctionner de façon à récupérer depuis le dispositif de stockage (14) le signal numérique de sortie (12).

7. Dispositif selon l'une quelconque des revendications précédentes, dans lequel le signal analogique d'entrée (11) est représentatif d'une température, et la valeur de seuil est représentative d'une température de seuil.

8. Dispositif selon l'une quelconque des revendications 1 à 6, dans lequel le signal analogique d'entrée (11) est représentatif d'un état de charge d'une batterie du dispositif, et la valeur de seuil est représentative d'un niveau de charge de seuil de la batterie.

9. Dispositif selon l'une quelconque des revendications précédentes, dans lequel l'unité de commande (5) peut fonctionner, à la réception du signal d'interruption (9) provenant du dispositif à comparateur (7), de façon à exécuter au moins une instruction prédéterminée.

10. Dispositif selon l'une quelconque des revendications précédentes, comprenant un dispositif accessoire, et dans lequel le signal analogique d'entrée (11) est représentatif de l'identité du dispositif accessoire.

11. Dispositif selon l'une quelconque des revendications 1 à 10, comprenant un dispositif accessoire, et dans lequel le signal analogique d'entrée (11) est représentatif de l'état du dispositif accessoire.

12. Dispositif selon l'une quelconque des revendications précédentes, dans lequel le signal d'interruption (11) est produit lorsque le signal de comparaison indique que la valeur du signal numérique de sortie (12) dépasse la valeur de seuil.

13. Dispositif selon l'une quelconque des revendications 1 à 12, dans lequel le signal d'interruption (9) est produit lorsque le signal de comparaison indique que la valeur du signal numérique de sortie (12) est inférieure à la valeur de seuil.

14. Dispositif selon l'une quelconque des revendications 1 à 12, dans lequel le signal d'interruption (9) est produit lorsque le signal de comparaison indique que la valeur du signal numérique de sortie (12) s'élève par rapport à la valeur de seuil.

15. Dispositif selon l'une quelconque des revendications 1 à 12, dans lequel le signal d'interruption (9) est produit lorsque le signal de comparaison indique que la valeur du signal numérique de sortie (12) descend par rapport à la valeur de seuil.

16. Dispositif selon l'une quelconque des revendications précédentes, dans lequel le dispositif est un téléphone mobile.

17. Dispositif selon l'une quelconque des revendications 1 à 16, dans lequel le dispositif est un assistant numérique portable (PDA).

18. Procédé de contrôle d'un signal analogique (11) dans un dispositif électronique portable comportant une unité de commande (5) et une unité (6) à convertisseur analogique en numérique, le procédé comprenant :
l'utilisation du convertisseur analogique en numérique (6) ;
la réception d'un signal analogique d'entrée (11) ;
la conversion du signal analogique d'entrée (11) en un signal numérique de sortie (12) ;
la comparaison de la valeur du signal numérique de sortie (12) à une valeur de seuil ; et
l'envoi d'un signal d'interruption (9) à l'unité de commande (5) en fonction du résultat de la comparaison, **caractérisé en ce que** la valeur du signal numérique de sortie (12) est stockée pour être récupérée.

19. Procédé selon la revendication 18, dans lequel la valeur du signal numérique de sortie (12) qui provoque un signal d'interruption (9) est stockée.

20. Procédé selon la revendication 18 ou 19, dans lequel la valeur stockée est accessible par l'unité de commande (5).

21. Procédé selon l'une quelconque des revendications 18 à 20, dans lequel le signal d'interruption (9) est envoyé à l'unité de commande (5) si la valeur du signal numérique de sortie (12) dépasse la valeur de seuil.

22. Procédé selon l'une quelconque des revendications 18 à 20, dans lequel le signal d'interruption (9) est envoyé à l'unité de commande (5) si la valeur du signal numérique de sortie (12) est inférieure à la valeur de seuil.

23. Procédé selon l'une quelconque des revendications 18 à 20, dans lequel le signal d'interruption (9) est envoyé à l'unité de commande (5) si le signal numérique de sortie (12) descend par rapport à la valeur de seuil.

24. Procédé selon l'une quelconque des revendications 18 à 20, dans lequel le signal d'interruption (9) est envoyé à l'unité de commande (5) si la valeur du signal numérique de sortie (12) s'élève par rapport à la valeur de seuil.

25. Procédé selon l'une quelconque des revendications 18 à 24, dans lequel la valeur de seuil est établie par l'unité de commande (5).

26. Procédé selon l'une quelconque des revendications 18 à 25, dans lequel le dispositif est un téléphone mobile.

27. Procédé selon l'une quelconque des revendications 18 à 25, dans lequel le dispositif est un assistant numérique portable (PDA).
